# EUROPEAN PATENT APPLICATION

(11) **EP 3 422 184 A1**
(43) Date of publication of application: **02.01.2019**
(21) Application number: 16894916.2
(22) Date of filing: 25.03.2016
(51) Int. Cl.: G06F 9/50

(54) **MANAGEMENT METHOD AND DEVICE FOR APPLICATION IN NETWORK FUNCTION VIRTUALIZATION ENVIRONMENT**

(71) Applicant: Huawei Technologies Co., Ltd., Longgang District Shenzhen, Guangdong 518129 (CN)
(72) Inventor: XU, Ruiyue, Shenzhen Guangdong 518129 (CN); ZHOU, Yan, Shenzhen Guangdong 518129 (CN); ZOU, Lan, Shenzhen Guangdong 518129 (CN); ZHU, Qianghua, Shenzhen Guangdong 518129 (CN)
(74) Representative: Gill Jennings & Every LLP
(86) International application number: PCT/CN2016/077350
(87) International publication number: WO 2017/161562

(57) **Abstract**

An application management method and apparatus in a network functions virtualization environment are provided. The method includes: receiving, by a first unit, a management message of an application, where the management message carries at least one of an identifier of the application and an identifier of a virtual machine corresponding to the application, the first unit is an agent unit of the application, and the application is provided by a provider other than a provider of the first unit (201); and managing, by the first unit, the application (202), for example, performing life cycle management on the application. In this solution, an application provided by a third party can be flexibly managed in the network functions virtualization environment.

## Description

### TECHNICAL FIELD

The present invention relates to the communications field, and in particular, to an application management method and apparatus, for example, an application management method and apparatus in a network functions virtualization (Network Functions Virtualization, NFV) environment.

### BACKGROUND

With development of cloud technologies, a virtualization technology, as a basic technology of cloud computing, is widely used in an enterprise data center and a large-scale cluster computing field. An NFV technology is a technology that implements a variety of network functions by using software and based on massive and normalized servers and switches. For example, the NFV technology may be used to implement virtual operation network address translation (Network Address Translation, NAT), a virtual wide area network, and a virtual application access router, to reduce costs, accelerate service deployment and resource auto scaling, and construct an innovation ecological chain. In the NFV technology, one computer is virtualized into a plurality of virtual logical computers, namely, virtual machines (Virtual Machine, VM). The virtual machine usually performs data communication with the outside of a server by using a virtual network interface card, a virtual switch, and a server physical network port connected to a chassis switch or a top-of-rack switch.

In the NFV technology, many types of network devices are merged into an industrial standard by using a virtualization technology of an information technology (Information Technology, IT), and are deployed in a data center or on a network node. For example, these network devices may include a plurality of types of devices, such as a service device, a switching device, and a storage device. In the NFV technology, various network functions are implemented in a form of software, so that the functions can run on a server of the industrial standard, and can be migrated, instantiated, redeployed, or the like based on a requirement. In addition, a virtualized network function (Virtualized Network Function, VNF) may be generated without installing a new device.

With development of the NFV technology, an operator wants to use a pipe advantage of the operator to closely combine a third-party application with an operator network, to implement more diverse service processing functions. However, the applicant finds it is found that the prior art lacks a solution for managing the third-party application in an NFV environment.

### SUMMARY

Embodiments of the present invention provide an application management method and apparatus, and a system, to manage a third-party application in an NFV environment.

According to an aspect, an embodiment of the present invention provides an application management method in an NFV environment. The method includes: receiving, by a first unit, a management message of an application, where the management message carries at least one of an identifier of the application and an identifier of a virtual machine corresponding to the application, the first unit is an agent unit of the application, and the application is an application provided by a provider other than a provider of the first unit; and managing, by the first unit, the application, for example, the first unit may perform life cycle management on the application. It can be learned that, the first unit and the application in the method are provided by different providers and the application may also be referred to as a third-party application. Therefore, in the solution provided in this embodiment of the present invention, the third-party application can be managed in the NFV environment.

In a possible design, the managing, by the first unit, the application may include one or any combination of the following cases: performing virtual resource management on the application; performing software management on the application; performing parameter configuration on the application; and monitoring the application or the virtual machine corresponding to the application. For example, the first unit may send a virtual resource management request to a second unit. The virtual resource management request carries the at least one of the identifier of the application and the identifier of the virtual machine corresponding to the application, and the second unit may be an application management unit or a virtualized network function management unit. Then, the first unit may receive information that is sent by the second unit and is about a virtual resource used for the application, to implement virtual resource management on the application. For another example, the first unit may obtain a software package of the application or software update information of the application. The first unit may receive a software package of the application or software update information of the application that is sent by another unit, or may obtain a preconfigured software package of the application or preconfigured software update information of the application. Then, the first unit may install the software package, or perform software upgrade on the application based on the software update information; or the first unit may send the software package or the software update information to the virtual machine corresponding to the application, to implement software management on the application. For another example, the first unit may configure an application parameter, a deployment parameter, or the like of the application, to implement parameter configuration on the application. For another example, the first unit may monitor at least one of a running status of the application, resource usage of the virtual machine corresponding to the application, performance information of the application or the virtual machine, and fault information of the application or the virtual machine, to monitor the application or the virtual machine corresponding to the application. Further, the first unit may further send, to the second unit, the at least one of the running status of the application, the resource usage of the virtual machine corresponding to the application, the performance information of the application or the virtual machine, and the fault information of the application or the virtual machine.

In a possible design, the first unit may receive the management message of the application that is sent by the second unit. For example, the first unit may receive the management message of the application that is sent by an application management unit, or may receive the management message of the application that is sent by a virtualized network function management unit, or may receive the management message of the application that is sent by another unit.

In a possible design, the first unit may be responsible for acting as an agent for one or more applications. The first unit and the one or more applications may be deployed independently, or the first unit and the one or more applications may be deployed in a same network element. For example, the first unit may be a VNF unit, and the VNF unit has an application agent function. For another example, the first unit is an application agent module, and the application agent module is included in a VNF unit. Further, the VNF unit that includes the application agent module may further include the foregoing one or more applications. It can be learned from the foregoing description that, when the first unit is responsible for acting as an agent for one application, each application can be managed and controlled independently, so that application deployment is more flexible; and when the second unit is responsible for acting as an agent for a plurality of applications, application deployment costs are relatively low.

According to another aspect, an embodiment of the present invention provides an application management method in an NFV environment. The method includes: sending, by a second unit, a management message of an application to a first unit, where the management message carries at least one of an identifier of the application and an identifier of a virtual machine corresponding to the application, the second unit is an application management unit or a virtualized network function management unit, the first unit is an agent unit of the application, and the application is an application provided by a provider other than a provider of the first unit, so that the first unit manages the application.

In a possible design, the second unit may further receive a virtual resource management request sent by the first unit. The virtual resource management request carries the at least one of the identifier of the application and the identifier of the virtual machine corresponding to the application. The second unit may further send, to the first unit, information about a virtual resource used for the application, so that the first unit can perform virtual resource management on the application.

In a possible design, the second unit may further send a software package of the application or software update information of the application to the first unit, so that the first unit can perform software management on the application.

In a possible design, the second unit may further receive at least one of the following items sent by the first unit: a running status of the application, resource usage of the virtual machine corresponding to the application, performance information of the application or the virtual machine, and fault information of the application or the virtual machine.

In a possible design, the second unit may be responsible for managing one or more first units, or may be responsible for managing one or more first units and an application for which the one or more first units act as an agent.

According to still another aspect, an embodiment of the present invention provides an application management apparatus in an NFV environment. The apparatus may implement a function executed by the first unit in the foregoing method embodiment. The function may be implemented by hardware, or may be implemented by hardware by executing corresponding software. The hardware or the software includes one or more modules corresponding to the function.

In a possible design, a structure of the apparatus includes a processor and a transceiver. The processor is configured to support the apparatus in executing a corresponding function in the foregoing method. The transceiver is configured to support the apparatus in communicating with another network element. The apparatus may further include a memory. The memory is configured to be coupled to the processor, and the memory stores a program instruction and data that are necessary for the apparatus.

According to still another aspect, an embodiment of the present invention provides an application management apparatus in an NFV environment. The apparatus may implement a function executed by the second unit in the foregoing method embodiment. The function may be implemented by hardware, or may be implemented by hardware by executing corresponding software. The hardware or the software includes one or more modules corresponding to the function.

In a possible design, a structure of the apparatus includes a processor and a transceiver. The processor is configured to support the apparatus in executing a corresponding function in the foregoing method. The transceiver is configured to support the apparatus in communicating with another network element. The apparatus may further include a memory. The memory is configured to be coupled to the processor, and the memory stores a program instruction and data that are necessary for the apparatus.

According to still another aspect, an embodiment of the present invention provides a communications system. The system includes the apparatus that is in the foregoing aspect and that may implement a function of the first unit, and the apparatus that is in the foregoing aspect and that may implement a function of the second unit.

According to still another aspect, an embodiment of the present invention provides a computer storage medium, configured to store a computer software instruction used by the foregoing first unit, where the computer storage medium includes a program designed for executing the foregoing aspect.

According to still another aspect, an embodiment of the present invention provides a computer storage medium, configured to store a computer software instruction used by the foregoing second unit, where the computer storage medium includes a program designed for executing the foregoing aspect.

Compared with the prior art, in the solutions provided in the embodiments of the present invention, the first unit receives the management message, of the application, that carries the at least one of the identifier of the application and the identifier of the virtual machine corresponding to the application, and manages the application. The first unit is an agent unit of the application, and the application is an application provided by a provider other than the provider of the first unit, namely, a third-party application. Therefore, the third-party application can be deployed and managed in the NFV environment.

### BRIEF DESCRIPTION OF DRAWINGS

FIG. 1 is a schematic diagram of a possible system architecture for implementing the present invention;
FIG. 2 is a schematic flowchart of an application management method in an NFV environment according to an embodiment of the present invention;
FIG. 3A is a communication schematic diagram of a life cycle management method for an application according to an embodiment of the present invention;
FIG. 3B is a communication schematic diagram of another life cycle management method for an application according to an embodiment of the present invention;
FIG. 4 is a schematic diagram of an MEC network element according to an embodiment of the present invention;
FIG. 5 is a schematic diagram of another possible system architecture according to an embodiment of the present invention;
FIG. 6 is a schematic diagram of still another possible system architecture according to an embodiment of the present invention;
FIG. 7 is a schematic diagram of still another possible system architecture according to an embodiment of the present invention;
FIG. 8 is a schematic diagram of still another possible system architecture according to an embodiment of the present invention;
FIG. 9A is a communication schematic diagram of an application initialization method according to an embodiment of the present invention;
FIG. 9B is a communication schematic diagram of an initialization method for a VNF network element according to an embodiment of the present invention;
FIG. 10A is a communication schematic diagram of an application scaling-out method according to an embodiment of the present invention;
FIG. 10B is a communication schematic diagram of an application scaling-in method according to an embodiment of the present invention;
FIG. 11 is a communication schematic diagram of another application initialization method according to an embodiment of the present invention;
FIG. 12 is a communication schematic diagram of another application scaling-out method according to an embodiment of the present invention;
FIG. 13A is a schematic structural diagram of a first unit according to an embodiment of the present invention;
FIG. 13B is a schematic structural diagram of another first unit according to an embodiment of the present invention;
FIG. 14A is a schematic structural diagram of a second unit according to an embodiment of the present invention; and
FIG. 14B is a schematic structural diagram of another second unit according to an embodiment of the present invention.

### DESCRIPTION OF EMBODIMENTS

To make the purpose, technical solutions, and advantages of the embodiments of the present invention clearer, the following describes the technical solutions in the embodiments of the present invention with reference to the accompanying drawings in the embodiments of the present invention.

Network architectures and service scenarios described in the embodiments of the present invention are used to describe the technical solutions in the embodiments of the present invention more clearly, but are not intended to limit the technical solutions provided in the embodiments of the present invention. A person of ordinary skill in the art may know that, as the network architectures evolve and a new service scenario emerges, the technical solutions provided in the embodiments of the present invention are also applicable to a similar technical problem.

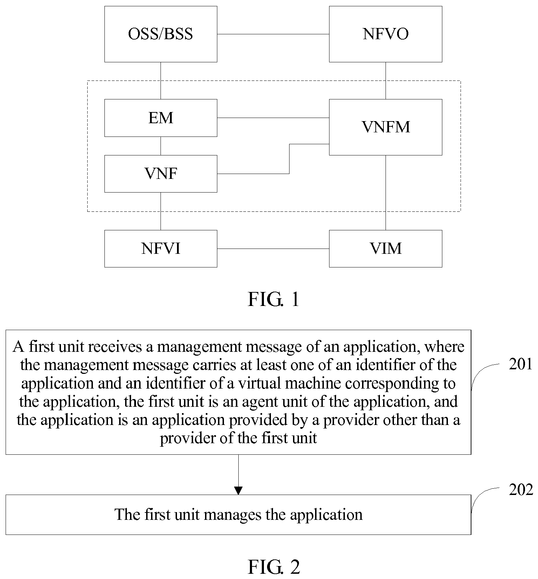

FIG. 1 is a schematic diagram of a possible system architecture for implementing the present invention. An independent service network and operations support system are usually used in a conventional network architecture. Compared with the conventional network architecture, an NFV technology deconstructs a network architecture vertically and horizontally. As shown in FIG. 1, a network architecture in an NFV environment is divided into three layers vertically:

Infrastructure layer: The infrastructure layer is a network functions virtualization infrastructure (NFV Infrastructure, NFVI), and may be understood as a resource pool from a perspective of cloud computing. When the NFVI is mapped to a physical infrastructure, the NFVI connects, by using a high-speed communications network, a plurality of data centers that are dispersed geographically. The NFVI needs to convert a physical computing/storage/switching resource into a virtual computing/storage/switching resource pool through virtualization.

Virtual network layer: The virtual network layer is corresponding to various current telecommunications service networks. Each physical network element is mapped as a virtual VNF unit. A resource required by the VNF unit needs to be decomposed into a virtual computing/storage/switching resource, and is carried by the NFVI. For an interface between VNF units, a signaling interface defined in a conventional network is still used.

Service management layer: The service management layer includes an operations support system (Operations Support System, OSS)/business support system (Business support system, BSS) and an element management (Element Manager, EM) unit, and needs to perform necessary modification and adjustment for virtualization.

The network architecture in the NFV environment is divided into two domains horizontally:

Service network domain: The service network domain is corresponding to various current telecommunications service networks.

Resource management and orchestration (Management and Orchestration, MANO) domain: Compared with a conventional network, a resource management and orchestration domain is added in the NFV environment. The resource management and orchestration domain is responsible for management and orchestration of an entire NFVI resource, mapping and association between a service network and the NFVI resource, implementation of an OSS service resource procedure, and the like. The MANO internally includes three units: a virtualized infrastructure management (Virtualized Infrastructure Manager, VIM) unit, a virtualized network function management (VNF Manager, VNFM) unit, and a network functions virtualization orchestration (NFV Orchestrator, NFVO) unit, which are respectively used to complete management on the NFVI, the VNF unit, and a network service (Network Service, NS) provided by the service network.

Generally, for a conventional network element, a vendor (vendor) provides all functions of the network element, all function submodules inside the network element are provided by the vendor and are not presented to the outside, but an entire function of the network element is presented to the outside. A function of the conventional network element may be used as a VNF unit, to be managed as a whole in a virtualization environment by using the EM.

The following further describes the embodiments of the present invention in detail based on the foregoing commonalities in the present invention.

An embodiment of the present invention provides an application management method in an NFV environment, and various units and systems that are based on the method. As an example, FIG. 2 shows an application management method.

In the method, a first unit receives a management message of an application, where the management message carries at least one of an identifier of the application and an identifier of a virtual machine corresponding to the application, the first unit is an agent unit of the application, the application is an application provided by a provider other than a provider of the first unit, and the application may also be referred to as a third-party application; and the first unit manages the application, for example, the first unit may perform life cycle management on the application. Life cycle management on an application may include new application adding, application scaling out/in, application release or deletion, and the like. New application adding may also be understood as application instantiation.

In an example, the managing, by the first unit, the application may include one or any combination of the following cases: performing virtual resource management on the application; performing software management on the application; performing parameter configuration on the application; and monitoring the application or the virtual machine corresponding to the application. The performing, by the first unit, virtual resource management on the application may include: sending, by the first unit, a virtual resource management request to a second unit, where the virtual resource management request carries the at least one of the identifier of the application and the identifier of the virtual machine corresponding to the application, and the second unit is an application management unit or a virtualized network function management unit; and receiving, by the first unit, information that is sent by the second unit and is about a virtual resource used for the application. The performing, by the first unit, software management on the application may include: obtaining, by the first unit, a software package of the application or software update information of the application, for example, the first unit may receive a software package of the application or software update information of the application that is sent by the second unit or another unit, or the first unit may obtain a preconfigured software package of the application or preconfigured software update information of the application; and installing, by the first unit, the software package, or performing software upgrade on the application based on the software update information; or sending, by the first unit, the software package or the software update information to the virtual machine. The performing, by the first unit, parameter configuration on the application may include: configuring an application parameter (application parameters), a deployment parameter (deployment parameters), or the like of the application. The monitoring, by the first unit, the application or the virtual machine corresponding to the application may include: monitoring, by the first unit, at least one of a running status of the application, resource usage of the virtual machine, performance information of the application or the virtual machine, and fault information of the application or the virtual machine. When the first unit monitors the application or the virtual machine corresponding to the application, the first unit may further send, to the second unit, the at least one of the running status of the application, the resource usage of the virtual machine, the performance information of the application or the virtual machine, and the fault information of the application or the virtual machine.

In an example, the first unit may receive the management message of the application that is sent by the second unit.

In the foregoing method, the first unit may be responsible for acting as an agent for one or more applications. As the agent unit of the application, an application agent function of the first unit may include one or any combination of the following functions: at least one of collecting, reporting, and detecting the performance information of the application or the corresponding virtual machine, at least one of collecting, reporting, and detecting the fault information of the application or the corresponding virtual machine, parameter configuration of the application, acting as an agent to apply for a virtual resource for the application, information exchange between the application and another network element, and the like. It should be noted that, content described in the foregoing scenario is only an example for describing the application agent function of the first unit, and the first unit may further have another application agent function based on an actual requirement.

Based on the method described above, an embodiment of the present invention designs a module: an application agent (App agent) module, and the module has the application agent function described above. For ease of description, in the following description, an application is also referred to as an App or an a APP, and the application agent module is also described as an App agent or an APP agent. In specific implementation, the App agent may be set as an independent network element, or may be a function module included in a network element, or a function of the App agent may be integrated into a network element. For example, when the App agent is set as an independent network element, the App agent may be the first unit. For another example, when the App agent is a function module included in a network element, it may be set that the App agent is included in the first unit. For another example, when the function of the App agent is integrated into a network element, it may be set that the first unit has the function of the App agent. It should be noted that, an app managed by the App agent and the App agent may be provided independently, or the app may be provided in a same network element as the App agent, or the app may be provided in a network element having the function of the App agent.

As an example, when the system architecture shown in FIG. 1 is applied, the first unit may be a VNF unit, and the VNF unit has the foregoing application agent function; or the first unit may be an application agent module, and the application agent module is included in a VNF unit.

In the foregoing method, the second unit may be responsible for managing one or more first units, or may be responsible for managing one or more first units and an application for which the one or more first units act as an agent. For example, when the second unit is an application management unit, an application management function of the second unit may include one or any combination of the following: application configuration management, application performance management, application fault management, application software management, performance management of the first unit, fault management of the first unit, capacity management of the first unit, and the like. For another example, when the second unit is a virtualized network function management unit, a virtualized network function management function of the second unit may include one or any combination of the following: virtual resource management such as at least one of allocation, reservation, update, and release of a virtual resource, virtualized network function management such as at least one of configuration management, fault management, and performance management of a virtualized network function, and the like. It should be noted that, the second unit may participate in or implement life cycle management on an application based on the foregoing function.

Based on the method described above, an embodiment of the present invention may further design a module: an application management (App manager) module, and the module has the application management function described above. For ease of description, in the following description, the application management module is also described as an APP-M or an APP-M. In specific implementation, the APP-M may be set as an independent network element, or may be a function module included in a network element, or a function of the APP-M may be integrated into a network element. For example, when the APP-M is set as an independent network element, the APP-M may be the second unit. For another example, when the APP-M is a function module included in a network element, it may be set that the APP-M is included in the second unit. For another example, when the function of the APP-M is integrated into a network element, it may be set that the second unit has the function of the APP-M.

As an example, when the system architecture shown in FIG. 1 is applied, the second unit may be an EM unit, and the EM unit has the application management function; or the second unit may be an APP-M, and the APP-M is included in an EM unit or is deployed as an independent network element; or the second unit may be a VNFM unit, and the VNFM unit has the application management function or the virtualized network function management function.

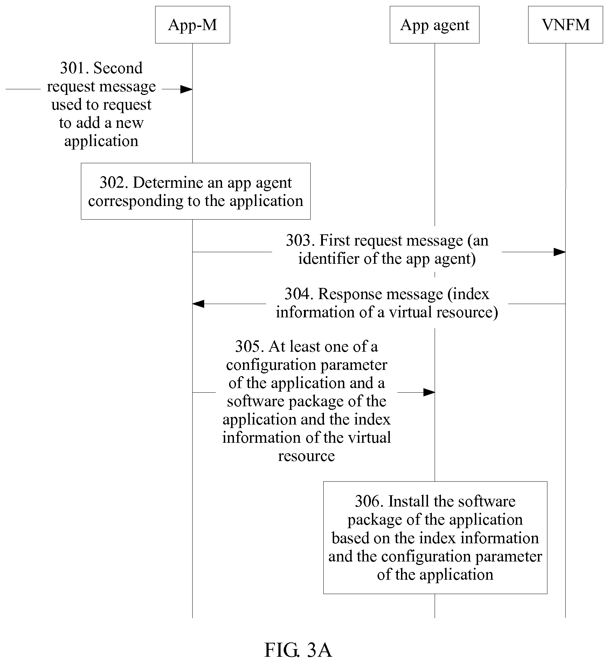

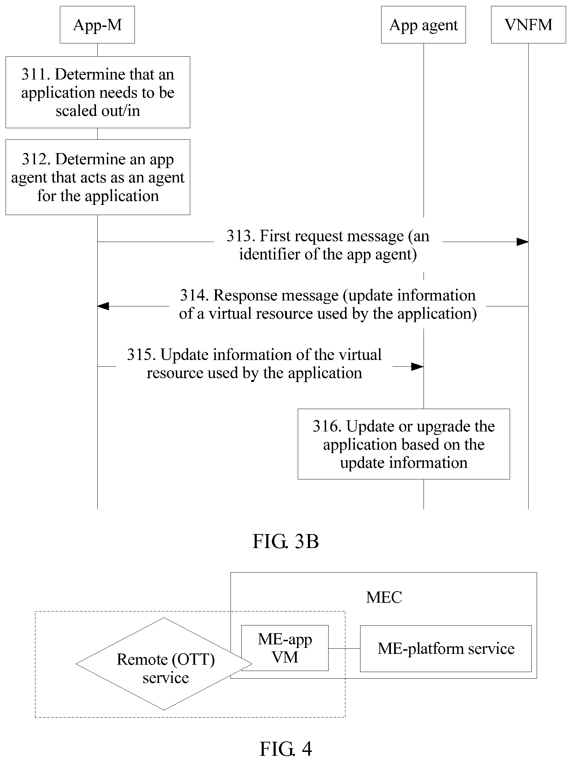

To clearly describe the application management method in an NFV environment, with reference to FIG. 3A and FIG. 3B, the following uses an example in which the first unit performs life cycle management on an application, to describe the solutions provided in the embodiments of the present invention. FIG. 3A and FIG. 3B are communication schematic diagrams of a possible life cycle management method for an application according to an embodiment of the present invention. FIG. 3A shows a life cycle management method for an application during new application adding. FIG. 3B shows a life cycle management method for an application during application scaling out/in. Description is provided by using an example in which the first unit is an App agent and the second unit is an APP-M.

With reference to FIG. 3A, the life cycle management method for an application during new application adding includes the following steps.

Step 301. An APP-M receives a second request message, where the second request message is used to request to add a new application.

In an example, after receiving the second request message, the APP-M determines that life cycle management needs to be performed on the application; or that the APP-M receives the second request message used to request to add a new application means that the APP-M determines that life cycle management needs to be performed on the application.

Step 302. The APP-M determines an App agent that acts as an agent for the application.

In an example, the acting as an agent for the application includes at least one of the following cases: at least one of collecting, reporting, and detecting performance information of the application, at least one of collecting, reporting, and detecting fault information of the application, parameter configuration of the application, acting as an agent to apply for a virtual resource for the application, and information exchange between the application and another network element.

Step 303. The APP-M sends, to a VNFM, a first request message that carries an identifier of the App agent, where the first request message is used for virtual resource management on the application or the App agent, to perform life cycle management on the application.

In an example, the APP-M sends, to the VNFM, a virtual resource request that carries the identifier of the App agent, to request a virtual resource required by the new application.

Step 304. The APP-M receives a response message that is of the first request message and is sent by the VNFM, where the response message carries index information of a virtual resource used for the new application.

In an example, after receiving the first request message, the VNFM allocates the virtual resource to the foregoing application, and sends the response message to the APP-M, to return the index information of the allocated virtual resource.

Step 305. The APP-M sends, to the App agent, at least one of a configuration parameter of the application and a software package of the application and the index information of the virtual resource used for the new application.

In an example, the APP-M may send a message to the App agent, and the message carries the index information of the virtual resource used for the new application, and further carries the at least one of the configuration parameter of the application and the software package of the application. Alternatively, the APP-M may first send, to the App agent, the index information of the virtual resource used for the new application, and then send, to the App agent, the at least one of the configuration parameter of the application and the software package of the application. Certainly, the APP-M may first send, to the App agent, the at least one of the configuration parameter of the application and the software package of the application, and then send, to the App agent, the index information of the virtual resource used for the new application.

In another example, the at least one of the configuration parameter of the application and the software package of the application may be preconfigured on the App agent.

Step 306. The App agent installs the software package of the application based on the index information and the configuration parameter of the application, to complete life cycle management on the application.

With reference to FIG. 3B, the life cycle management method for an application during application scaling out/in includes the following steps.

Step 311. An APP-M determines that an application needs to be scaled out/in.

In an example, the APP-M may determine, based on at least one of the following factors, that the application needs to be scaled out/in: a resource request, performance data of the App agent, alarm data of the App agent, performance data of the application, and alarm data of the application. The resource request includes a resource request of at least one of the App agent, the application, an OSS, an application orchestration unit, and a business support system. For example, the resource request may be a resource request sent by the App agent to the APP-M, or the resource request may be a resource request that is of the application and that is forwarded by the App agent to the APP-M.

It may be understood that, when the application needs to be scaled out/in, an App agent that acts as an agent for the application needs to be correspondingly scaled out/in. Therefore, the factor used by the APP-M to determine that the application needs to be scaled out/in includes a factor related to the App agent.

Step 312. The APP-M determines an App agent that acts as an agent for the application.

Step 313. The APP-M sends, to a VNFM, a first request message that carries an identifier of the App agent, where the first request message is used for virtual resource management on the application or the App agent, to perform life cycle management on the application.

In an example, the APP-M sends a scaling-out/in request to the VNFM, and the scaling-out/in request includes the identifier of the App agent and an identifier of the application.

Step 314. The APP-M receives a response message that is of the first request message and is sent by the VNFM, where the response message carries update information of a virtual resource used by the application.

Step 315. The APP-M sends, to the App agent, the update information of the virtual resource used by the application.

In an example, the APP-M further sends a configuration parameter of the application to the App agent.

Step 316. The App agent updates or upgrades the application based on the update information.

In an example, the App agent may update or upgrade the application based on the update information and the configuration parameter of the application that is sent by the APP-M or a preconfigured configuration parameter of the application.

It should be noted that, in the method shown in FIG. 3B, for content that is the same as or similar to that in the method shown in FIG. 3A, refer to detailed descriptions in FIG. 3A, and details are not described herein again.

Compared with the prior art, in the solutions provided in the embodiments of the present invention, an application provided by a third party can be flexibly managed, so that deploying and managing the application provided by the third party in the NFV environment are feasible, and this has high efficiency.

In the NFV environment, a conventional network element is converted into a VNF unit that has a corresponding function, to be managed as a whole in a virtualization environment. The VNF unit in the embodiments of the present invention is a special network element. A vendor of the network element provides a platform and some submodules inside the network element, and provides an interface. A third-party vendor may provide a submodule by using the interface, to implement another function of the network element. For example, the network element may be a Mobile Edge Computing (Mobile Edge Computing, MEC) network element or another network element. The following uses the MEC network element as an example, to further describe the embodiments of the present invention.

FIG. 4 is a schematic diagram of an MEC network element according to an embodiment of the present invention. Referring to FIG. 4, the MEC network element provides two functions: an ME-platform service and a remote service. The ME-platform service represents a platform service, and the service is provided by an MEC vendor and uses a conventional management manner of a VNF network element. The remote service represents a third-party service, and the service is provided by another vendor and runs on a virtual machine (such as an ME-app VM shown in FIG. 4). The remote service invokes, by using an interface, operational data generated by the ME-platform service. How an app of the remote service is managed in an NFV environment is a core of the present invention. The life cycle management method for an application in an NFV environment provided in the embodiments of the present invention mainly includes the following: how a system provides a running environment for the app, applying for a virtual resource, and the like.

The following describes another possible system architecture in the embodiments of the present invention by using an example in which the VNF network element is an MEC network element and based on two modules: the App agent and the APP-M.

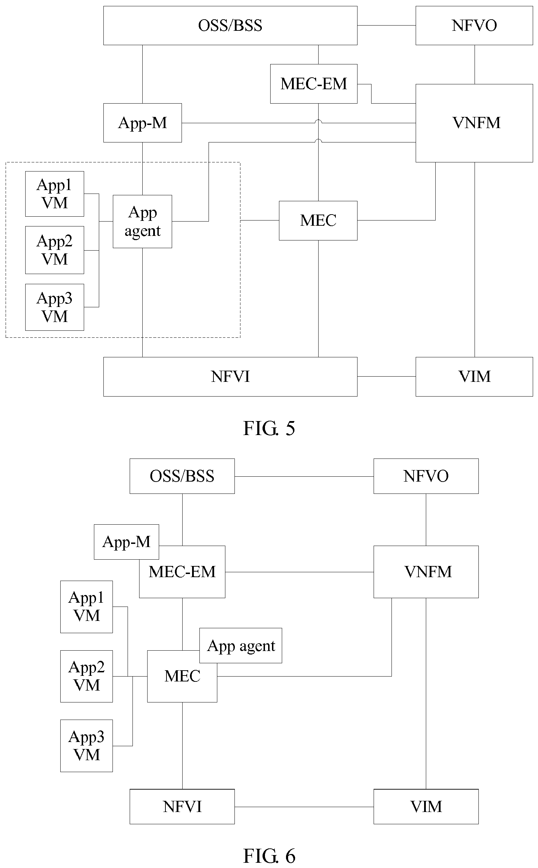

FIG. 5 is a schematic diagram of another possible system architecture according to an embodiment of the present invention. Referring to FIG. 5, in the architecture, an MEC network element provides two functions: a platform service and a third-party service. The third-party service is implemented by using a third-party app. The third-party app runs on a virtual machine, and the virtual machine interacts with the MEC network element by using an interface. An MEC-EM network element is an EM network element and is configured to manage the MEC network element, for example, fault management, performance management, and configuration management. An APP-M is a network element deployed independently, and is responsible for managing an App agent and an app. The App agent may be a network element deployed independently, or the App agent and a plurality of apps are deployed as an independent network element, and the App agent is responsible for deploying and managing the plurality of apps.

FIG. 6 is a schematic diagram of still another possible system architecture according to an embodiment of the present invention. Referring to FIG. 6, in the architecture, an app and an App agent are separately provided. The App agent is integrated into an MEC network element, and all apps are managed and controlled by the MEC network element together. Specifically, all the apps may be deployed, managed, and controlled by a platform service of the MEC network element together. An APP-M is integrated into an MEC-EM network element, and is responsible for managing the MEC network element and the app.

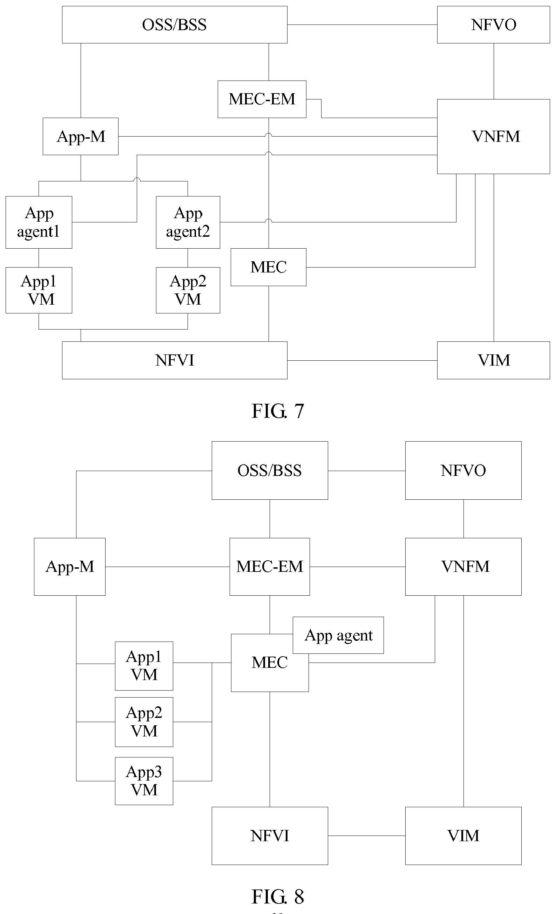

FIG. 7 is a schematic diagram of still another possible system architecture according to an embodiment of the present invention. Referring to FIG. 7, in the architecture, each App agent is responsible for managing and controlling one app. Each App agent and the app managed by the App agent may be deployed as an independent network element, or the App agent and the app may be separately deployed. An APP-M is a network element deployed independently, and is responsible for managing the App agent and the app.

FIG. 8 is a schematic diagram of still another possible system architecture according to an embodiment of the present invention. Referring to FIG. 8, in the architecture, an app and an App agent are separately provided. The App agent is integrated into an MEC network element, and all apps are managed and controlled by the MEC network element together. An APP-M is a network element deployed independently, and is responsible for managing the App agent and the app. The APP-M and an MEC-EM jointly complete life cycle management on the app.

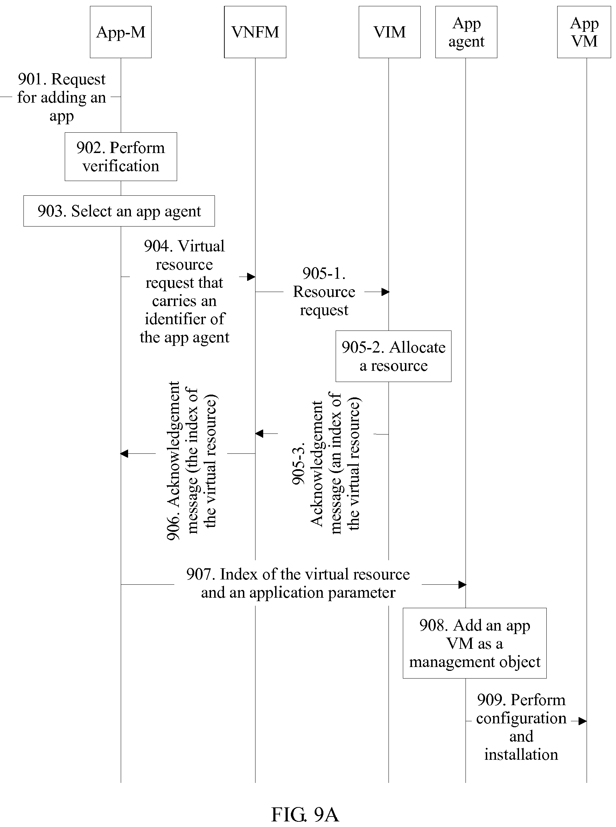

With reference to FIG. 9A to FIG. 12, the following uses an example in which the first unit is an App agent and the second unit is an APP-M, or uses a network element into which an App agent and an APP-M are integrated as an example, to further describe the solutions provided in the embodiments of the present invention.

FIG. 9A is a communication schematic diagram of an application initialization method in an NFV environment according to an embodiment of the present invention. Referring to FIG. 9A, the method includes the following steps.

Step 901. An APP-M receives a request for adding a new app.

Specifically, the APP-M may receive a request that is sent by an OSS or an application orchestration unit (App Orchestrator) and is for adding a new app.

Step 902. The APP-M verifies the request for adding a new app.

Specifically, the APP-M verifies the request for adding a new app, to determine authorization and security of the request.

Step 903. The APP-M selects an App agent that manages the app.

Step 904. The APP-M uses a scaling-out/in interface of the App agent network element to initiate a virtual resource request to a VNFM, to apply for a virtual resource used for running of the new app.

Optionally, the virtual resource request may carry a virtualized network function descriptor (Virtualized Network Service Descriptor, VNFD) of the App agent.

Step 905. The VNFM scales out/in the App agent based on a VNFD of the App agent network element, to meet a virtual resource requirement of the new app.

In this step, if the virtual resource required by the app does not fall within a range of the VNFD of the App agent, the VNFD of the App agent needs to be updated first, to meet the virtual resource requirement of the new app.

Specifically, step 905 the following steps:
Step 905-1. The VNFM sends a resource request to a VIM based on the VNFD of the App agent and the received request message.
Step 905-2. The VIM allocates a virtual resource to the App agent.
Step 905-3. The VIM sends an acknowledgement message to the VNFM, where the acknowledgement message carries an index of the virtual resource.
   The index of the virtual resource may be specifically a virtual machine identifier (VM ID).
Step 906. The VNFM returns the index of the allocated virtual resource to the APP-M.
Step 907. The APP-M sends the index of the new virtual resource and an application parameter (including an application configuration parameter and/or an app software package) to the App agent.
Step 908. The App agent updates a new virtual machine as an object managed by the App agent.
Step 909. The App agent configures the corresponding virtual machine and installs the app software package.

An application scaling-out method in an NFV environment and an application scaling-in method in an NFV environment are similar. For brevity, the following describes only the application scaling-out method in an NFV environment.

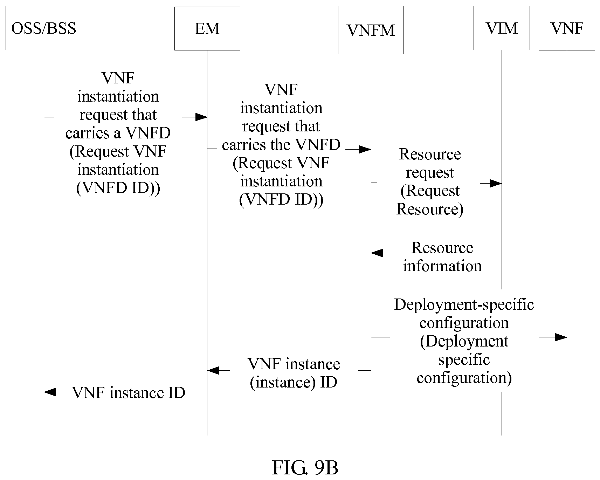

It should be noted that, before the method shown in FIG. 9A is executed, a network element corresponding to the App agent has been initialized. For an initialization procedure of the network element corresponding to the App agent, a conventional initialization procedure, of a VNF network element, shown in FIG. 9B may be used. Details are not described herein.

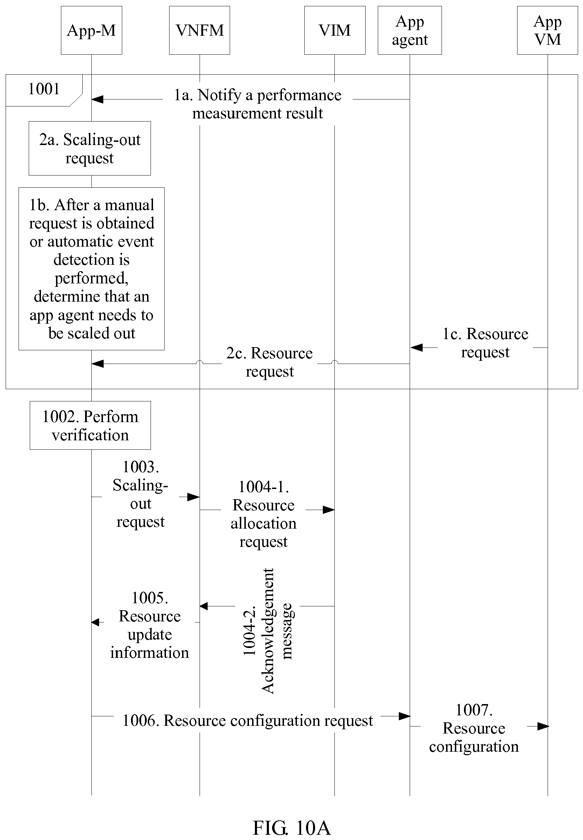

FIG. 10A is a communication schematic diagram of an application scaling-out method in an NFV environment according to an embodiment of the present invention. Referring to FIG. 10A, the method includes the following steps.

Step 1001. An APP-M determines that scaling out needs to be performed. It may be understood that, due to a scaling-out/in requirement of an application, an App agent that manages the application needs to be correspondingly scaled out/in, to meet the requirement of the application.

In an example, that scaling out needs to be performed may be determined based on the following three aspects:
The APP-M collects a performance measurement result related to an App agent (1a), where the performance measurement result is generated after the App agent performs detection on an app VM or an app that is managed by the App agent, and the APP-M detects that a capacity is not enough and requests scaling out (2a). Data that needs to be measured may be different for different app VMs or apps. For example, the data that needs to be measured may include a user quantity. The performance measurement result may be understood as a type of information, and the information may be specifically performance information and/or fault information.

A scaling-out request sent by an OSS or an app orchestrator is received (1b). Specifically, the OSS or the app orchestrator may obtain a manual request or perform automatic event detection, and then send the scaling-out request to the APP-M.

An app sends a resource request to the App agent due to a service requirement of the app (1c), and the App agent forwards the resource request to the APP-M (2c).

Step 1002. The APP-M verifies a scaling-out request.

Step 1003. The APP-M sends an App agent scaling-out request to a VNFM, where the request includes at least one of an App agent ID, an app/app VM ID, and scaling-out information.

Step 1004-1. The VNFM requests to allocate a virtual resource to an App agent, to meet the scaling-out requirement.

Specifically, the VNFM may request a VIM to allocate the virtual resource to the App agent, to meet the scaling-out requirement.

Step 1004-2. The VNFM receives an acknowledgement message returned by a VIM.

The acknowledgement message may carry information about the virtual resource allocated by the VIM to the App agent.

Step 1005. The VNFM returns related App agent resource update information to the APP-M.

Step 1006. The APP-M requests to configure a VNF (the App agent and an app VM), where the configuration is mainly application-related parameter configuration.

Step 1007. The App agent updates the virtual resource of app VM, and configures a related application parameter.

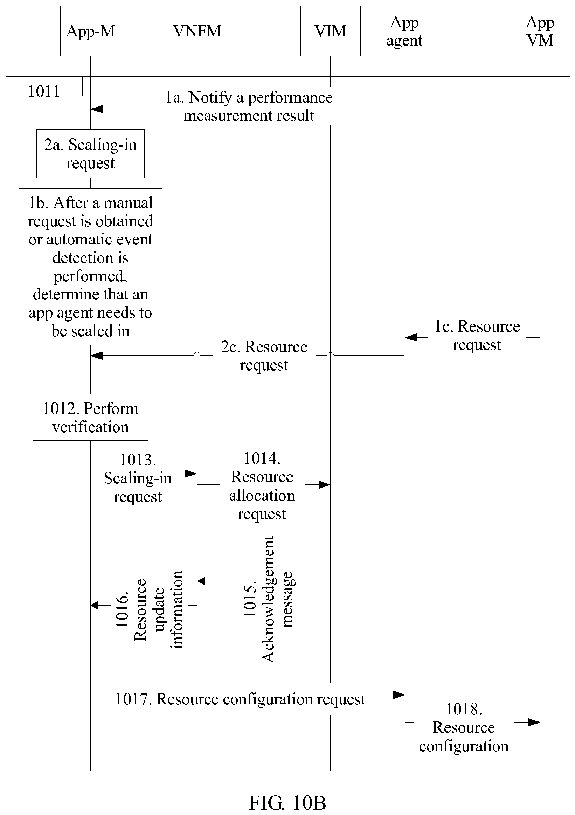

FIG. 10B is a communication schematic diagram of an application scaling-in method in an NFV environment according to an embodiment of the present invention. The scaling-in method is similar to the scaling-out method shown in FIG. 10A. For same or similar content, refer to detailed descriptions in FIG. 10A. Details are not described herein again.

The methods shown in FIG. 9A, FIG. 10A, and FIG. 10B are applicable to the system architecture shown in FIG. 5. In these methods, the following application architecture is used: The App agent is deployed independently, or the App agent and a plurality of apps are together deployed as an independent network element, and the App agent is responsible for deploying and managing the plurality of apps centrally. Therefore, the app can be managed and controlled independently and more flexibly, and app deployment costs are relatively low.

The methods shown in FIG. 9A, FIG. 10A, and FIG. 10B are also applicable to the system architecture shown in FIG. 6. In these methods, because the App agent is integrated into the MEC network element, before the application initialization method shown in FIG. 9A is executed, the MEC network element needs to have been initialized successfully and have run in a network. For an initialization procedure of the MEC network element, a conventional initialization procedure, of a VNF network element, shown in FIG. 9B is used. All actions performed by the APP-M are performed by the MEC-EM network element. Because the App agent is integrated into the MEC network element, and all apps are managed and controlled by the MEC network element together, step 903 does not need to be performed. All actions performed by the App agent are performed by the MEC network element. Any parameter related to the App agent in the methods is replaced with a parameter of the MEC network element. For example, the scaling-out/in interface of the App agent in step 904 is specifically a scaling-out/in interface of the MEC network element. In the embodiments of the present invention, the following application architecture is used: The App agent is integrated into the MEC network element, and the MEC network element is responsible for deploying and managing a plurality of apps centrally. Therefore, an existing NFV management architecture can be used again, and no app is presented to the outside and app deployment costs are relatively low.

The methods shown in FIG. 9A, FIG. 10A, and FIG. 10B are also applicable to the system architecture shown in FIG. 7. Before the application initialization method shown in FIG. 9A is executed, a VNFD of an App agent corresponding to an app has been on-boarded (on-boarded). Because one App agent manages one app, and the App agent and the app managed by the App agent are deployed as an independent network element, the App agent and the app managed by the App agent may be referred to as an app VNF network element. Any parameter related to the App agent in the methods is replaced with a parameter of the app VNF network element. All actions of the App agent are performed by the app VNF network element. In addition, because there is a one-to-one correspondence between the App agent and the app, step 903 does not need to be performed. In the embodiments of the present invention, the following application architecture is used: The App agent is deployed independently, and is responsible for deploying and managing one app. Therefore, each APP application can be managed and controlled independently, and the app is used as an independent VNF, without depending on an MEC, so that app deployment can be more flexible.

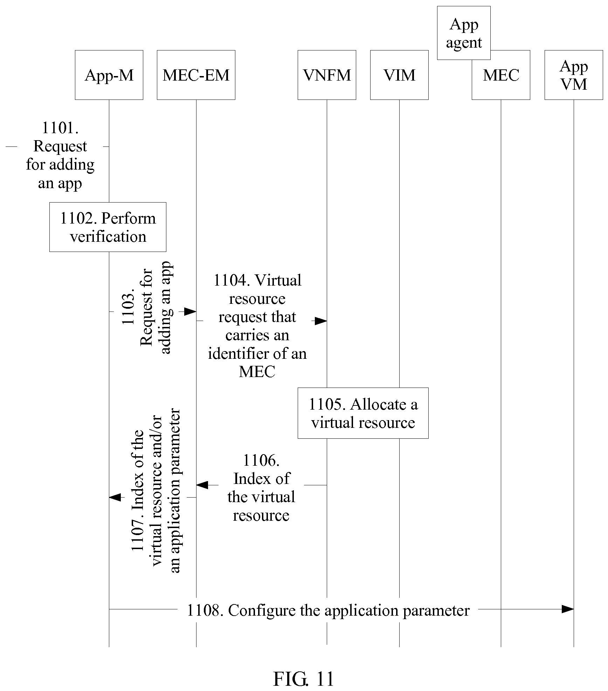

FIG. 11 is a communication schematic diagram of another application initialization method in an NFV environment according to an embodiment of the present invention. The method is applicable to the system architecture shown in FIG. 8. Before the method is executed, an MEC has been initialized successfully and has run in a network. Referring to FIG. 11, the method includes the following steps.

Step 1101. An APP-M receives a request for adding a new app.

Step 1102. The APP-M verifies the request for adding a new app.

Step 1103. The APP-M forwards, to an MEC-EM, the request for adding a new app.

Steps 1101 to 1103 are optional steps. In this embodiment of the present invention, the MEC-EM may directly receive the request for adding a new app.

Step 1104. The MEC-EM uses a scaling-out/in interface of the MEC network element to initiate a virtual resource request to a VNFM, to apply for a virtual resource used for running of the new app.

Step 1105. The VNFM scales out/in the MEC based on a VNFD of the MEC network element, to meet a virtual resource requirement of the new app.

In this step, if the virtual resource required by the app does not fall within a range of the VNFD of the MEC, the VNFD of the MEC needs to be updated first, to meet the virtual resource requirement of the new app.

Step 1106. The VNFM returns an index (VM ID) of an allocated virtual resource to the MEC-EM.

Step 1107. The MEC-EM sends the index of the new virtual resource and/or an application parameter (including an application configuration parameter and/or an app software package) to the APP-M.

Step 1108. The APP-M sends or configures the application parameter (including the application configuration parameter and/or the app software package) to a corresponding app VM.

In an example, the APP-M sends or configures the foregoing application parameter to the corresponding app VM by using the MEC.

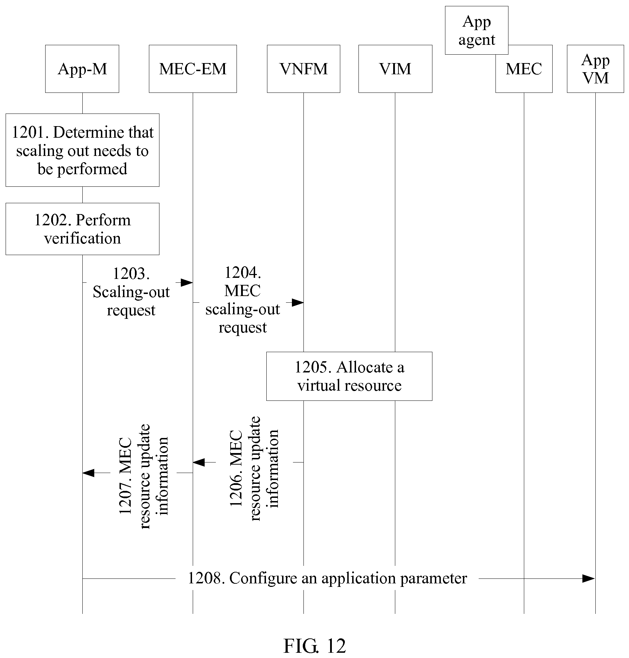

FIG. 12 is a communication schematic diagram of another application scaling-out method in an NFV environment according to an embodiment of the present invention. The method is applicable to the system architecture shown in FIG. 8. Referring to FIG. 12, the method includes the following steps.

Step 1201. An APP-M determines that scaling out needs to be performed.

That scaling out needs to be performed may be determined based on the following three aspects:
The APP-M collects an app-related performance measurement result (la), where the performance measurement result is generated after the APP-M performs detection on an app VM or an app that is managed by the APP-M, and the APP-M detects that a capacity is not enough and requests scaling out (2a).

A scaling-out request sent by an OSS or an app orchestrator is received (1b).

Specifically, the OSS or the app orchestrator may obtain a manual request or perform automatic event detection, and then send the scaling-out request to the APP-M.

An app sends a resource request to the APP-M due to a service requirement of the app (1c).

Step 1202. The APP-M verifies a scaling-out request.

Step 1203. The APP-M forwards the scaling-out request to an MEC-EM.

Step 1204. The MEC-EM sends an MEC scaling-out request to a VNFM, where the request includes at least one of an MEC ID, an app/app VM ID, and scaling-out information.

The MEC scaling-out request in step 1204 and the scaling-out request in step 1203 may not be totally the same.

Step 1205. The VNFM requests to allocate a virtual resource to an MEC, to meet the scaling-out requirement.

Step 1206. The VNFM returns related MEC resource update information to the MEC-EM.

Step 1207. The MEC-EM returns the related MEC resource update information to the APP-M.

Step 1208. The APP-M requests to configure an APP VM, where the configuration is mainly application-related parameter configuration.

In an example, the APP-M configures the application-related parameter to the corresponding app VM by using the MEC.

In this embodiment of the present invention, an App agent is integrated into the MEC network element, and the independent APP-M and the MEC-EM are jointly responsible for life cycle management on an app, so that app deployment costs are relatively low.

In the system architecture shown in FIG. 8, a scaling-in method is similar to the scaling-out method, and details are not described herein.

The foregoing mainly describes the solutions provided in the embodiments of the present invention from a perspective of interaction between network elements. It may be understood that, to implement the foregoing functions, each network element such as the first unit or the second unit includes a corresponding hardware structure and/or software module for performing each function. A person skilled in the art should easily be aware that, units and algorithm steps in the examples described with reference to the embodiments disclosed in this specification may be implemented in a form of hardware or a combination of hardware and computer software in the present invention. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of the present invention.

In the embodiments of the present invention, the first unit, the second unit, and the like may be divided into function modules based on the foregoing method examples. For example, each function module may be obtained through division based on a corresponding function, or two or more functions may be integrated into one processing module. The integrated module may be implemented in a form of hardware, or may be implemented in a form of a software function module. It should be noted that, the module division in the embodiments of the present invention is an example and is only logical function division. There may be another division manner in actual implementation.

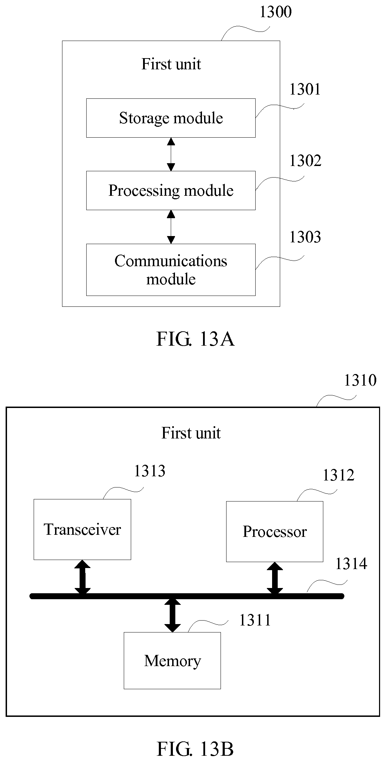

When an integrated unit is used, FIG. 13A is a possible schematic structural diagram of the first unit in the foregoing embodiments. The first unit 1300 includes a processing module 1302 and a communications module 1303. The processing module 1302 is configured to control and manage an action of the first unit. For example, the processing module 1302 is configured to support the first unit in performing processes 201 and 202 in FIG. 2, a process 306 in FIG. 3A, a process 316 in FIG. 3B, processes 908 and 909 in FIG. 9A, processes 1001 and 1007 in FIG. 10A, and processes 1011 and 1018 in FIG. 10B; and/or is configured to perform other technical processes described in this specification. The communications module 1303 is configured to support the first unit in communicating with another network entity, for example, communicating with the function module or the network entity shown in FIG. 1, FIG. 5, FIG. 6, FIG. 7, or FIG. 8. The first unit may further include a storage module 1301, configured to store program code and data of the first unit.

The processing module 1302 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 1302 may implement or execute various logical blocks, modules, and circuits in the examples described with reference to content disclosed in the present invention. Alternatively, the processor may be a combination that implements a computation function, for example, a combination that includes one or more microprocessors or a combination of a DSP and a microprocessor. The communications module 1303 may be a transceiver, a transceiver circuit, a communications interface, or the like. The storage module 1301 may be a memory.

When the processing module 1302 is a processor, the communications module 1303 is a transceiver, and the storage module 1301 is a memory, the first unit in this embodiment of the present invention may be a first unit shown in FIG. 13B.

Referring to FIG. 13B, the first unit 1310 includes a processor 1312, a transceiver 1313, a memory 1311, and a bus 1314. The transceiver 1313, the processor 1312, and the memory 1311 are interconnected by using the bus 1314. The bus 1314 may be a peripheral component interconnect (Peripheral Component Interconnect, PCI) bus, or an extended industry standard architecture (Extended Industry Standard Architecture, EISA) bus, or the like. The bus may be classified into an address bus, a data bus, a control bus, and the like. For ease of representation, only one thick line is used to represent the bus in FIG. 13B, but it does not indicate that there is only one bus or only one type of bus.

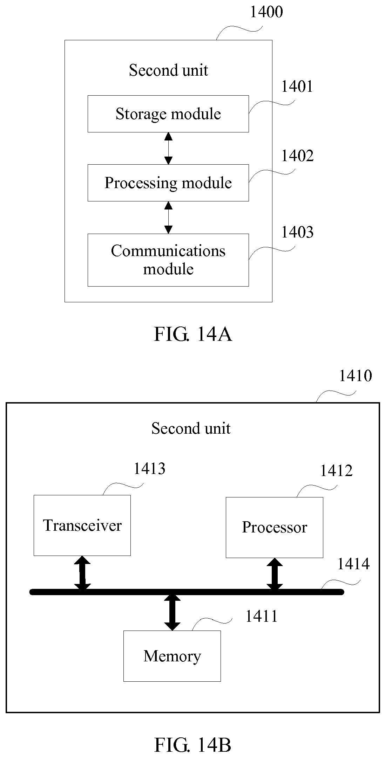

When an integrated unit is used, FIG. 14A is a possible schematic structural diagram of the second unit in the foregoing embodiments. The second unit 1400 includes a processing module 1402 and a communications module 1403. The processing module 1402 is configured to control and manage an action of the second unit. For example, the processing module 1402 is configured to support the second unit in performing processes 302, 303, and 305 in FIG. 3A, process 311, 312, 313, and 315 in FIG. 3B, processes 902, 903, 904, and 907 in FIG. 9A, processes 1001, 1002, 1003, and 1006 in FIG. 10A, processes 1011, 1012, 1013, and 1017 in FIG. 10B, processes 1102, 1103, and 1108 in FIG. 11, and processes 1201, 1202, 1203, and 1208 in FIG. 12; and/or is configured to perform other technical processes described in this specification. The communications module 1303 is configured to support the second unit in communicating with another network entity, for example, communicating with the function module or the network entity shown in FIG. 1, FIG. 5, FIG. 6, FIG. 7, or FIG. 8. The second unit may further include a storage module 1401, configured to store program code and data of the first unit.

The processing module 1402 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 1402 may implement or execute various logical blocks, modules, and circuits in the examples described with reference to content disclosed in the present invention. Alternatively, the processor may be a combination that implements a computation function, for example, a combination that includes one or more microprocessors or a combination of a DSP and a microprocessor. The communications module 1403 may be a transceiver, a transceiver circuit, a communications interface, or the like. The storage module 1401 may be a memory.

When the processing module 1402 is a processor, the communications module 1403 is a transceiver, and the storage module 1401 is a memory, the second unit in this embodiment of the present invention may be a second unit shown in FIG. 14B.

Referring to FIG. 14B, the second unit 1410 includes a processor 1412, a transceiver 1413, a memory 1411, and a bus 1414. The transceiver 1413, the processor 1412, and the memory 1411 are interconnected by using the bus 1414. The bus 1414 may be a peripheral component interconnect (Peripheral Component Interconnect, PCI) bus, or an extended industry standard architecture (Extended Industry Standard Architecture, EISA) bus, or the like. The bus may be classified into an address bus, a data bus, a control bus, and the like. For ease of representation, only one thick line is used to represent the bus in FIG. 14B, but it does not indicate that there is only one bus or only one type of bus.

Method or algorithm steps described with reference to content disclosed in the present invention may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. An example storage medium is coupled to the processor, so that the processor can read information from the storage medium and can write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in the foregoing one or more examples, functions described in the present invention may be implemented by hardware, software, firmware, or any combination thereof. When the functions are implemented by software, the functions may be stored in a computer readable medium or transmitted as one or more instructions or code in the computer readable medium. The computer readable medium includes a computer storage medium and a communications medium, where the communications medium includes any medium that enables a computer program to be transmitted from one place to another place. The storage medium may be any available medium accessible to a general-purpose or dedicated computer.

The objectives, technical solutions, and benefits of the present invention are further described in detail in the foregoing specific implementations. It should be understood that the foregoing descriptions are only specific implementations of the present invention, but are not intended to limit the protection scope of the present invention. Any modification, equivalent replacement, or improvement made within the spirit and principle of the present invention shall fall within the protection scope of the present invention.

## Claims

1. An application management method in a network functions virtualization NFV environment, wherein the method comprises:
receiving, by a first unit, a management message of an application, wherein the management message carries at least one of an identifier of the application and an identifier of a virtual machine corresponding to the application, the first unit is an agent unit of the application, and the application is an application provided by a provider other than a provider of the first unit; and
managing, by the first unit, the application.

2. The method according to claim 1, wherein the managing, by the first unit, the application comprises one or any combination of the following cases:
performing, by the first unit, virtual resource management on the application;
performing, by the first unit, software management on the application;
performing, by the first unit, parameter configuration on the application; and
monitoring, by the first unit, the application or the virtual machine corresponding to the application.

3. The method according to claim 2, wherein the performing, by the first unit, virtual resource management on the application comprises:
sending, by the first unit, a virtual resource management request to a second unit, wherein the virtual resource management request carries the at least one of the identifier of the application and the identifier of the virtual machine corresponding to the application, and the second unit is an application management unit or a virtualized network function management unit; and
receiving, by the first unit, information that is sent by the second unit and is about a virtual resource used for the application.

4. The method according to claim 2 or 3, wherein the performing, by the first unit, software management on the application comprises:
obtaining, by the first unit, a software package of the application or software update information of the application; and
installing, by the first unit, the software package, or performing software upgrade on the application based on the software update information; or
sending, by the first unit, the software package or the software update information to the virtual machine.

5. The method according to any one of claims 2 to 4, wherein the monitoring, by the first unit, the application or the virtual machine corresponding to the application comprises:
monitoring, by the first unit, at least one of a running status of the application, resource usage of the virtual machine, performance information of the application or the virtual machine, and fault information of the application or the virtual machine.

6. The method according to claim 5, wherein the method further comprises:
sending, by the first unit to the second unit, the at least one of the running status of the application, the resource usage of the virtual machine, the performance information of the application or the virtual machine, and the fault information of the application or the virtual machine.

7. The method according to any one of claims 1 to 6, wherein the first unit is responsible for acting as an agent for one or more applications.

8. The method according to any one of claims 1 to 7, wherein
the first unit is a virtualized network function VNF unit, and the VNF unit has an application agent function; or
the first unit is an application agent module, and the application agent module is comprised in a VNF unit.

9. An application management method in a network functions virtualization NFV environment, wherein the method comprises:
sending, by a second unit, a management message of an application to a first unit, wherein the management message carries at least one of an identifier of the application and an identifier of a virtual machine corresponding to the application, the second unit is an application management unit or a virtualized network function management unit, the first unit is an agent unit of the application, and the application is an application provided by a provider other than a provider of the first unit, so that the first unit manages the application.

10. The method according to claim 9, wherein the method further comprises:
receiving, by the second unit, a virtual resource management request sent by the first unit, wherein the virtual resource management request carries the at least one of the identifier of the application and the identifier of the virtual machine corresponding to the application; and
sending, by the second unit to the first unit, information about a virtual resource used for the application.

11. The method according to claim 9 or 10, wherein the method further comprises:
sending, by the second unit, a software package of the application or software update information of the application to the first unit.

12. The method according to any one of claims 9 to 11, wherein the method further comprises:
receiving, by the second unit, at least one of the following items sent by the first unit: a running status of the application, resource usage of the virtual machine, performance information of the application or the virtual machine, and fault information of the application or the virtual machine.

13. An application management apparatus in a network functions virtualization NFV environment, wherein the apparatus comprises a processing module and a communications module, wherein
the processing module is configured to receive a management message of an application by using the communications module, wherein the management message carries at least one of an identifier of the application and an identifier of a virtual machine corresponding to the application, the apparatus is an agent unit of the application, and the application is an application provided by a provider other than a provider of the apparatus; and the processing module is further configured to manage the application.

14. The apparatus according to claim 13, wherein the processing module is specifically configured to perform one or any combination of the following cases:
performing virtual resource management on the application;
performing software management on the application;
performing parameter configuration on the application; and
monitoring the application or the virtual machine corresponding to the application.

15. The apparatus according to claim 14, wherein the processing module is specifically configured to: send a virtual resource management request to a second unit by using the communications module, wherein the virtual resource management request carries the at least one of the identifier of the application and the identifier of the virtual machine corresponding to the application, and the second unit is an application management unit or a virtualized network function management unit; and receive, by using the communications module, information that is sent by the second unit and is about a virtual resource used for the application.

16. The apparatus according to claim 14 or 15, wherein the processing module is specifically configured to: obtain a software package of the application or software update information of the application; and install the software package, or perform software upgrade on the application based on the software update information; or send the software package or the software update information to the virtual machine.

17. The apparatus according to any one of claims 14 to 16, wherein the processing module is specifically configured to monitor at least one of a running status of the application, resource usage of the virtual machine, performance information of the application or the virtual machine, and fault information of the application or the virtual machine.

18. The apparatus according to claim 17, wherein the processing module is further configured to send, to the second unit by using the communications module, the at least one of the running status of the application, the resource usage of the virtual machine, the performance information of the application or the virtual machine, and the fault information of the application or the virtual machine.

19. The apparatus according to any one of claims 13 to 18, wherein the apparatus is responsible for acting as an agent for one or more applications.

20. The apparatus according to any one of claims 13 to 19, wherein
the apparatus is a virtualized network function VNF unit, and the VNF unit has an application agent function; or
the apparatus is an application agent module, and the application agent module is comprised in a VNF unit.

21. An application management apparatus in a network functions virtualization NFV environment, wherein the apparatus comprises a processing module and a communications module, wherein
the processing module is configured to send a management message of an application to a first unit by using the communications module, wherein the management message carries at least one of an identifier of the application and an identifier of a virtual machine corresponding to the application, the apparatus is an application management unit or a virtualized network function management unit, the first unit is an agent unit of the application, and the application is an application provided by a provider other than a provider of the first unit, so that the first unit manages the application.

22. The apparatus according to claim 21, wherein the processing module is specifically configured to: receive, by using the communications module, a virtual resource management request sent by the first unit, wherein the virtual resource management request carries the at least one of the identifier of the application and the identifier of the virtual machine corresponding to the application; and send, to the first unit by using the communications module, information about a virtual resource used for the application.

23. The apparatus according to claim 21 or 22, wherein the processing module is further configured to send a software package of the application or software update information of the application to the first unit by using the communications module.

24. The apparatus according to any one of claims 21 to 23, wherein the processing module is further configured to receive, by using the communications module, at least one of the following items sent by the first unit: a running status of the application, resource usage of the virtual machine, performance information of the application or the virtual machine, and fault information of the application or the virtual machine.
